# EUROPEAN PATENT APPLICATION

(11) **EP 4 574 528 A1**
(43) Date of publication of application: **25.06.2025**
(21) Application number: 23219634.5
(22) Date of filing: 22.12.2023
(51) Int. Cl.: B60L 7/20, B60L 58/12, B60L 58/18, B60W 30/18, B60W 20/14, B60L 15/20

(54) **COMPUTER SYSTEM AND METHOD FOR ELECTRICALLY PROPELLED VEHCILE**

(71) Applicant: VOLVO TRUCK CORPORATION, 405 08 Göteborg (SE)
(72) Inventor: ERIKSSON, Anders, 423 49 TORSLANDA (SE); JOHNSON, Niclas, 427 37 BILLDAL (SE); HASSELBERG, Per, 423 49 TORSLANDA (SE)
(74) Representative: Ström & Gulliksson AB

(57) **Abstract**

Present disclosure relates to a computer system comprising processing circuitry configured to obtain state of charge data from a brake energy storage battery of an electrically propelled vehicle, said vehicle comprising an electrical motor brake system for braking at least one electrical propulsion motor of said vehicle and charging the brake energy storage battery with regenerative energy obtained from the electrical propulsion motor, and cause control of the state of charge of the brake energy storage battery based on road segment data associated with a road segment ahead of the vehicle and the state of charge data.

## Description

### TECHNICAL FIELD

The disclosure relates generally to computer systems and computer-implemented methods. In particular aspects, the disclosure relates to computer system and a computer-implemented method for an electrically propelled vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Conventional friction wheel brakes, drum or disc, fade due to heat when used for longer period to control speed downhill in a fully loaded heavy vehicle such as a fully loaded heavy truck. For vehicles equipped with internal combustion engines, engine braking may be used to control speed and assuring that wheel brakes are not continuously engaged. Thus, brake fading may be avoided.

A fully electric truck uses the electric motor with the batteries' resistance to generate brake power going downhill and thus avoiding wheel brakes fading. When an electric truck is fully charged, the batteries does not provide sufficient resistance for the electric motor and therefore brake power from the driveline is substantially reduced. In such case, there is a big risk of wheel brake fading and consequent loss of speed control.

A need for improvement within the field has been identified.

### SUMMARY

According to a first aspect of the disclosure, a computer system is provided. The computer system comprises processing circuitry. The processing circuitry is configured to obtain state of charge data from a brake energy storage battery of an electrically propelled vehicle, said vehicle comprising an electrical motor brake system for braking at least one electrical propulsion motor of said vehicle and charging the brake energy storage battery with regenerative energy obtained from the electrical propulsion motor. The processing circuitry is configured to cause control of a state of charge of the brake energy storage battery based on road segment data associated with a road segment ahead of the vehicle and the state of charge data. The first aspect of the disclosure may seek to improve the safety and efficiency of the vehicle. A technical benefit may include that the brake energy storage battery may be controlled to ensure that motor braking may be performed even for long distances. Another technical benefit is that the risk for fading of the wheel brakes may be reduced.

Optionally in some examples, including in at least one preferred example, the road segment data comprises topography data and/or map data associated with a predicted route and/or a current position of the vehicle. A technical benefit may include that the available capacity of the brake energy storage battery may be controlled to provide sufficient resistance for motor braking for an upcoming road segment.

Optionally in some examples, including in at least one preferred example, the processing circuitry being further configured to obtain weight data associated with a weight of the vehicle, and cause control of the state of charge of the brake energy storage battery based on the weight data. A technical benefit may include that the available capacity of the brake energy storage battery may be controlled more accurately due to the regenerative energy correlating to the current weight of the vehicle and any load carried by the vehicle.

Optionally in some examples, including in at least one preferred example, the processing circuitry being further configured to: determine a target state of charge of the brake energy storage battery based on the road segment data, and cause control of the state of charge of the brake energy storage battery based on the target state of charge. A technical benefit may include that the target state of charge allows for an improved accuracy in the control of the available capacity of the brake energy storage battery.

Optionally in some examples, including in at least one preferred example, wherein the processing circuitry is further configured to determine a regenerative charging level associated with the charging of the brake energy storage battery estimated to be provided by the electrical motor brake system for the road segment ahead of the vehicle, and determine the target state of charge based on the regenerative charging level. A technical benefit may include that the predicted amount of regenerative energy generated is utilized to determine how much available capacity is required in order to accommodate for the motor braking for the upcoming road segment.

Optionally in some examples, including in at least one preferred example, wherein the processing circuitry is configured to process the road segment data to identify a downhill slope and cause control of the state of charge of the brake energy storage battery based on the characteristics of the identified downhill slope. A technical benefit may include that a downhill slope commonly is associated with a need for motor braking, thereby requiring available capacity in the brake energy storage battery.

Optionally in some examples, including in at least one preferred example, the vehicle comprises a propulsion battery configured to power the electric propulsion motor.

Optionally in some examples, including in at least one preferred example, the brake energy storage battery is formed by a battery unit provided separately from the propulsion battery. A technical benefit may include that the separate battery unit may be particularly optimized for faster and more efficiently charging during motor braking and discharging between motor braking operations.

Optionally in some examples, including in at least one preferred example, the processing circuitry is configured to cause the brake energy storage battery to be inoperable in response to the state of charge of the propulsion battery being below a capacity threshold value. A technical benefit may include that the propulsion battery is prioritized in cases where there is available capacity in the propulsion battery during a motor braking operation such that the propulsion battery can be utilized to brake the vehicle as desired.

Optionally in some examples, including in at least one preferred example, the propulsion battery forms the brake energy storage battery. A technical benefit may include that the brake energy storage battery may be defined by means of controlling the software controlling the propulsion battery, making it possible to retrofit existing vehicles with a brake energy storage battery in a simple manner. Another technical benefit may include that the cost-efficiency is improved.

Optionally in some examples, including in at least one preferred example, the processing circuitry is configured to determine, based on the state of charge data, the occurrence of a charging operation wherein the brake energy storage battery is recharged, and responsive to the occurrence of the charging operation, cause control of the charging operation based on the road segment data. A technical benefit may include that during a charging operation, for example at a charge station, the charge provided to the battery may be adjusted based on the route on which the vehicle will travel after the charging operation, improving the efficiency of the charging operation and the vehicle.

Optionally in some examples, including in at least one preferred example, the processing circuitry is configured to obtain braking operational data associated with the operation of the electrical motor brake system for the road segment ahead of the vehicle, and cause control of the state of charge of the brake energy storage battery based on said braking operational data. A technical benefit may include the available capacity of the brake energy storage battery may be more accurately controlled as parameters relating to the operation of the motor braking may be taken into account.

According to a second aspect of the disclosure, an electrically propelled vehicle is provided. The electrically propelled vehicle comprises at least one electrical propulsion motor, an electrical motor brake system for braking the at least one electrical propulsion motor and a computer system of any of the herein described examples. The second aspect of the disclosure may seek to improve the safety and efficiency of the vehicle. A technical benefit may include that the brake energy storage battery may be controlled to ensure that motor braking may be performed even for long distances. Another technical benefit is that the risk for fading of the wheel brakes may be reduced.

According to a third aspect of the disclosure, a battery management system is provided. The battery management control system comprises the computer system according to any of the herein described examples. The battery management control system is configured to be operatively connected to an electrically propelled vehicle. The third aspect of the disclosure may seek to improve the safety and efficiency of the vehicle by means of a management system which may be remote from the vehicle. A technical benefit may include that the brake energy storage battery may be controlled to ensure that motor braking may be performed even for long distances from an external device. Another technical benefit is that the risk for fading of the wheel brakes may be reduced.

According to a fourth aspect of the disclosure, a computer-implemented method is provided. The computer-implemented method comprises obtaining, by a processing circuitry of a computer system, state of charge data from a brake energy storage battery of an electrically propelled vehicle, said vehicle comprising an electrical motor brake system for braking at least one electrical propulsion motor of said vehicle and charging the brake energy storage battery with regenerative energy obtained from the electrical motor brake system. The computer-implemented method further comprises causing, by the processing circuitry control of a state of charge of the brake energy storage battery based on road segment data associated with a road segment ahead of the vehicle and the state of charge data. The fourth aspect of the disclosure may seek to improve the safety and efficiency of the vehicle. A technical benefit may include that the brake energy storage battery may be controlled to ensure that motor braking may be performed even for long distances. Another technical benefit is that the risk for fading of the wheel brakes may be reduced.

Optionally in some examples, including in at least one preferred example, the method further comprises obtaining, by the processing circuitry, weight data associated with a weight of the vehicle, and causing, by the processing circuitry, control of the state of charge of the brake energy storage battery based on the weight data. A technical benefit may include that the available capacity of the brake energy storage battery may be controlled more accurately due to the regenerative energy correlating to the current weight of the vehicle and any load carried by the vehicle.

Optionally in some examples, including in at least one preferred example, the method further comprises determining, by the processing circuitry, a target state of charge of the brake energy storage battery based on the road segment data, and causing, by the processing circuitry, control of the state of charge of the brake energy storage battery based on the target state of charge. A technical benefit may include that the target state of charge allows for an improved accuracy in the control of the available capacity of the brake energy storage battery.

Optionally in some examples, including in at least one preferred example, the method comprises determining, by the processing circuitry, a regenerative charging level associated with the charging of the brake energy storage battery estimated to be provided by the electrical motor brake system for the road segment ahead of vehicle, and determining, by the processing circuitry, the target state of charge based on the regenerative charging level. A technical benefit may include that the predicted amount of regenerative energy generated is utilized to determine how much available capacity is required in order to provide sufficient resistance for motor braking for the upcoming road segment.

Optionally in some examples, including in at least one preferred example, the method further comprises processing, by the processing circuitry, the road segment data to identify a downhill slope, and causing control of the state of charge of the brake energy storage battery based on the characteristics of the identified downhill slope. A technical benefit may include that a downhill slope commonly is associated with a need for motor braking, thereby requiring available capacity in the brake energy battery storage.

Optionally in some examples, including in at least one preferred example, the brake energy storage battery is a dedicated battery provided separately from a propulsion battery configured to power the electric propulsion motor of the vehicle. The method further comprises causing, by the processing circuitry, the brake energy storage battery to be inoperable in response to the state of charge of the propulsion battery being below a capacity threshold value. A technical benefit may include that the separate battery unit may be particularly optimized for faster and more efficiently charging during motor braking and discharging between motor braking operations. Another technical benefit may include that the propulsion battery is prioritized in cases where there is available capacity in the propulsion battery during a motor braking operation such that the propulsion battery can be utilized to brake the vehicle as desired.

Optionally in some examples, including in at least one preferred example, the method further comprises determining, by the processing circuitry, the occurrence of a charging operation wherein the brake energy storage battery is recharged, and responsive to the occurrence of the charging operation, causing, by the processing circuitry, control of the charging operation based on the road segment data. A technical benefit may include that during a charging operation, for example at a charge station, the charge provided to the battery may be adjusted based on the route on which the vehicle will travel after the charging operation, making the charging operation and the vehicle more efficient.

Optionally in some examples, including in at least one preferred example, the method further comprises obtaining, by the processing circuitry, braking operational data associated with the operation of the electrical motor brake system for the road segment ahead of the vehicle, and causing, by the processing circuitry of the state of charge of the brake energy storage battery based on said braking operational data. A technical benefit may include the available capacity of the brake energy storage battery may be more accurately controlled as parameters relating to the operation of the motor braking may be taken into account.

According to a fifth aspect of the disclosure, a computer program product is provided. The computer program product comprises program code for performing, when executed by a processing circuitry, the method of any of the examples described herein. The fifth aspect of the disclosure may seek to improve the safety and efficiency of the vehicle. A technical benefit may include that the brake energy storage battery may be controlled to ensure that motor braking may be performed even for long distances. Another technical benefit is that the risk for fading of the wheel brakes may be reduced.

According to a sixth aspect of the disclosure, a non-transitory computer-readable storage medium is provided. The non-transitory computer-readable storage medium comprises instructions, which when executed by a processing circuitry, cause the processing circuitry to perform the method of any of the examples described herein. The sixth aspect of the disclosure may seek to improve the safety and efficiency of the vehicle. A technical benefit may include that the brake energy storage battery may be controlled to ensure that motor braking may be performed even for long distances. Another technical benefit is that the risk for fading of the wheel brakes may be reduced.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary side view of a vehicle according to an example.
**FIG. 2** is a schematic view of a vehicle according to an example.
**FIG. 3** is a schematic view of a vehicle according to another example.
**FIG. 4** is an exemplary block diagram of a computer system and vehicle according to an example.
**FIG. 5** is an exemplary block diagram of a computer system and vehicle according to another example.
**FIG. 6** is an exemplary block diagram of a brake battery manager according to an example.
**FIG. 7** is a schematic drawing of an exemplary implementation of the brake battery manager of **FIG. 6**.
**FIG. 8** is an exemplary block diagram of a method according to an example.
**FIG. 9** is an exemplary block diagram of a method according to another example
**FIG. 10** is an exemplary block diagram of a method according to another example.
**FIG. 11** is an exemplary block diagram of a computer program product according to an example.
**FIG. 12** is a schematic diagram of an exemplary computer system for implementing examples disclosed herein, according to an example.
**FIG. 13** is another view of **FIG. 1** according to an example.

### DETAILED DESCRIPTION

The detailed description set forth below provides information and examples of the disclosed technology with sufficient detail to enable those skilled in the art to practice the disclosure.

The present disclosure provides a method and system which may address the risk of the batteries of an electrically propelled vehicle not providing enough resistance to enable braking of the vehicle by means of motor braking.

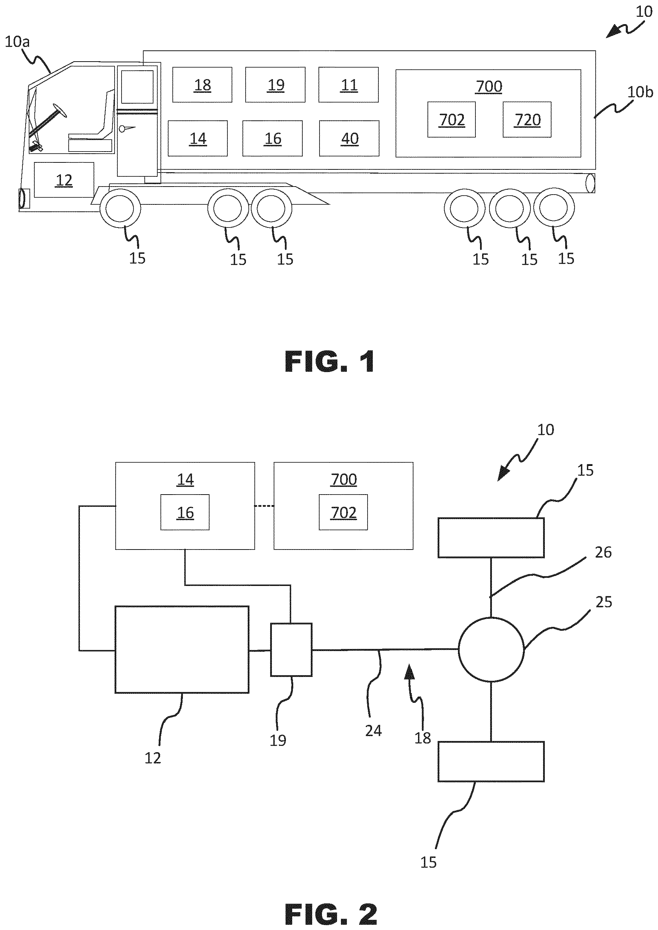

**FIG. 1** is an exemplary schematic side view of a heavy-duty vehicle **10** (hereinafter referred to as vehicle **10**). The vehicle **10** comprises a tractor unit **10a** which is arranged to tow a trailer unit **10b**. In other examples, other vehicles may be employed, e.g., trucks, buses, and construction equipment. The vehicle **10** comprises all vehicle units and associated functionality to operate as expected, such as a drivetrain **18**, chassis, and various control systems. The vehicle **10** comprises one or more propulsion sources **12**. The vehicle **10** is an electrically propelled vehicle. Thus, the one or more propulsion source **12** may comprise at least one electrical propulsion motor. It may be envisioned that the one or more propulsion source **12** may additionally comprise any suitable propulsion source **12** exemplified by, but not limited to, one or more or a combination of an electrical motor, a combustion engine such as a diesel, gas or gasoline powered engine. The one or more propulsion source **12**, e.g. the at least one electrical propulsion motor **12**, is configured to transfer (mechanical) power to the drivetrain **18**. The drivetrain **18** is configured to transfer power from the propulsion source **12** to one or more wheels **15** of the vehicle **10**. The drive train may comprise one or more transmissions, drive shafts, axles, differentials etc. The vehicle **10** further comprises an energy source suitable for providing energy for the at least one electrical propulsion motor **12**. Since the propulsion source is an electrical propulsion motor **12**, a suitable energy source would be a battery.

The at least one electrical propulsion motor **12** may be utilized for braking the vehicle **10**. The vehicle **10** may thus comprise an electrical motor brake system **19** for braking the at least one electrical propulsion motor **12** of the vehicle **10** and charging a brake energy storage battery **16** with regenerative energy obtained from the electrical motor brake system **19**. The vehicle **10** may thus comprise the brake energy storage battery **16**.

The electrical motor brake system **19** may be configured to cause regenerative braking of the electrical propulsion motor **12**. The electrical motor brake system **19** may be configured to distribute the regenerative energy provided by the regenerative braking of the electrical propulsion motor **12** to the brake energy storage battery **16** and/or the propulsion battery **14**. The regenerative energy may thus charge the brake energy storage battery **16** and/or the propulsion battery **14**. The electrical motor brake system **19** may be configured to cause the electrical propulsion motor **12** to act as a generator to enable motor braking and providing the regenerative energy. The electrical motor brake system **19** may thus comprise circuitry configured to cause switching of the current provided to the electrical propulsion motor **12** and electrically connecting the electrical propulsion motor **12** to the brake energy storage battery **14** and/or the propulsion battery **16**.

The brake energy storage battery **16** may form a part of a propulsion battery **14** of the vehicle **1** or be provided as a separate battery. The propulsion battery **14** may be configured to power the electric propulsion motor **12**.

The vehicle **10** further comprises sensor circuitry **11** arranged to detect, measure, sense or otherwise obtain data relevant for operation of the vehicle **10**. The sensor circuitry **11** may comprise one or more of an accelerometer, a gyroscope, a wheel Speed Sensor, an ABS sensor, a throttle position sensor, a fuel level sensor, a temperature Sensor, a pressure sensor, a rain sensor, a light sensor, proximity sensor, a lane departure warning sensor, a blind spot detection sensor, a TPMS sensor, a current sensor, a rpm sensor etc. Operational data relevant for operation of the vehicle **10** may include, but is not limited to, one or more of a speed of the vehicle **10**, a weight of the vehicle **10**, an inclination of the vehicle **10**, a status of an energy source of the vehicle **10** (state of charge, fuel level etc.), a current speed limit of a current road travelled by the vehicle **10**, etc.

Accordingly, the sensor circuitry **11** may be configured to detect, measure, sense or otherwise obtain state of charge data associated with the state of charge of the brake energy battery **16** and/or the propulsion battery **14.**

The vehicle **10** further comprises communications circuitry **40** configured to receive and/or send communication.

A computer system **700** may be provided. The computer system **700** may be operatively connected to, the drivetrain **18**, the sensor circuitry **11**, the electrical motor brake system **19**, the brake energy storage battery **16**, the propulsion battery **14**, the communications circuitry **40** and/or the at least one electrical propulsion motor **12** of the vehicle **10**. The computer system **700** comprises processing circuitry **702**. The computer system **700** may comprise a storage device **720**, advantageously a non-volatile storage device such as a hard disk drives (HDDs), solid-state drives (SSDs) etc. In some examples, the storage device **720** is operatively connected to the computer system **700**.

**FIG. 2-3** depicts examples of a vehicle **10** and a computer system **700**.

The vehicle **10** may comprise the drivetrain **18**. The electrical propulsion motor **12** may be able to drive the drive wheels **15** of the vehicle **10** via the drivetrain **18**. In the depicted example, the drivetrain **18** comprises a propeller shaft **24**, a differential **25** and/or a drive shaft **26** for each drive wheel **15**. In the depicted example, the vehicle does not include a gearbox or clutch, however it may be envisioned that the drivetrain **18** may comprise a gearbox and/or a clutch. It may also be envisioned that additional propulsion sources are utilized. Accordingly, the vehicle may very well comprise additional electrical propulsion motors and/or combustion engine(s) connected to the drivetrain **18** for driving the drive wheels **15**.

In **FIG. 2**, the propulsion battery **14** forms the brake energy storage battery **16**. Hence, the functionality of the brake energy storage battery **16** may be provided by the propulsion battery **14**. The electrical motor brake system **19** may thus be configured to charge the propulsion battery **14** with the regenerative energy obtained from the electrical propulsion motor **12**.

The brake energy storage battery **16** may be defined relative the propulsion battery **14** in a plurality of ways.

In one example, the brake energy storage battery **16** may be formed by the propulsion battery **14** as a whole. According to such an example, the capacity of the brake energy storage battery **16** is equivalent to the capacity of the propulsion battery **14**.

In one example, the brake energy storage battery **16** may be defined by a physical partition of the propulsion battery **14**. For example, the brake energy storage battery **16** may be provided as one or more of a plurality of modules and/or battery cells forming the propulsion battery **16**. The capacity of the brake energy storage battery **16** may thus be equivalent to the capacity of the physical partition of the propulsion battery **14**. The capacity of said physical partition may be independently controlled relative the remaining propulsion battery **14** by means of a battery control system and/or the computer system **700**.

In one example, the brake energy storage battery **16** may be defined by a virtual partition of the propulsion battery **14**. For example the brake energy storage battery **14** may be virtually defined by means of the battery control system and/or the computer system **700**. The capacity of the brake energy storage battery **16** may thus be equivalent to a determined state of charge dedicated to provide the brake energy storage battery **16**.

Further referencing **FIG. 2**, the brake energy system **19** may be configured to charge the propulsion battery **14** with the regenerative energy obtained from the electrical propulsion motor **12** thereby charging the propulsion battery **14** and/or the brake energy storage battery **16**.

As aforementioned, the propulsion battery **14** may be configured to power the electrical propulsion motor **12**. The brake energy storage battery **16** may also be configured to power the electrical propulsion motor **12**. The electrical motor brake system **19**, the propulsion battery **14** and the brake energy storage battery **16** may be electrically connected to the electrical propulsion motor **12**. The electrical motor brake system **19**, the propulsion battery **14**, the brake energy storage battery **16** and/or the electrical propulsion motor **12** may be operatively connected to the computer system **700**.

It may be envisioned that the brake energy storage battery **16** and/or the propulsion battery **14** may be electrically connected to other components of the vehicle **10** and configured to power said components.

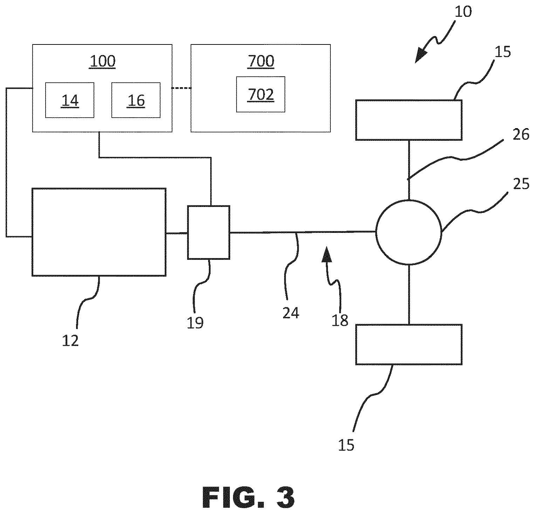

**FIG. 3** depicts a vehicle **10** and a computer system **700** according to another example.

In the depicted example, the brake energy storage battery **16** is formed by a battery unit provided separately from the propulsion battery **14**. Hence, the brake energy storage battery **16** may provided as a separate battery unit independent from the propulsion battery **14**. In one example, the vehicle **10** may comprise a battery system **100**, the battery system **100** may comprise the brake energy storage battery **16** and the propulsion battery **14**.

The brake energy storage battery **16** may be configured to power the electric propulsion motor **12** and/or any other component of the vehicle **10**. Hence, in contrast to the propulsion battery **14**, the brake energy storage battery **16** may not necessarily be configured to power the electrical propulsion motor **12**.

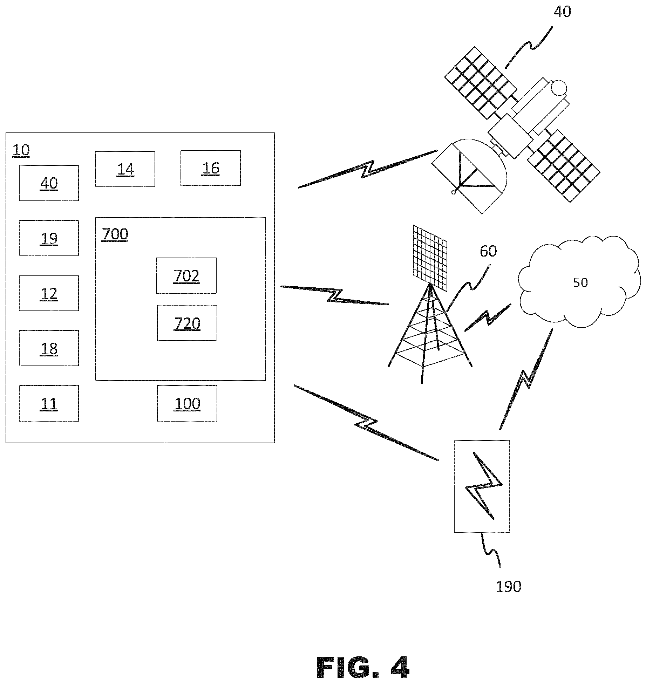

**FIG. 4-5** depicts block views of the vehicle **10** and the computer system **700**. The computer system **700** may be partially or entirely comprised in the vehicle **10**. The computer system **700** may also be provided in entirety externally from the vehicle **10**.

The vehicle **10** may be in operative communication with external devices, such as a charging station **190** and, in case of the computer system **700** being fully or partially external to the vehicle **10**, the computer system **700**. The connection may be provided by e.g. the communications circuitry **40**. The vehicle **10** may be in communication with the external devices directly or via a cloud (backend) server **50**. The vehicle **10** may communicate with the cloud server **50** directly or via a communications interface such as a cellular communications interface **60**, such as a radio base station. The cloud server **50** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. Communication with the external devices may be provided by any suitable communications protocol exemplified by, but not limited to Dedicated Short-Range Communications (DSRC), Cellular Vehicle-to-Everything (C-V2X), IEEE 802.11p, LTE-V (LTE-V2X), 5G NR (New Radio) V2X, etc. The vehicle **10** may further be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **40** to determine a geographical position of the vehicle **10**.

The vehicle **10** may comprise some or all parts of the computer system **700** and/or the cloud server **50** may comprise some or all part of the computer system **700** and/or an external device may comprise some or all part of the computer system **700**. The computer system **700** may be operatively connected to the communications circuitry **40**, the sensor circuitry **11**, the propulsion battery **14**, the brake energy storage battery **16** and/or the electrical propulsion motor **12** of the vehicle **10**. The computer system **700** comprises processing circuitry **702**. The computer system **700** may comprise the storage device **720**, advantageously a non-volatile storage device such as a hard disk drives (HDDs), solid-state drives (SSDs) etc. In some examples, the storage device **720** is operatively connected to the computer system **700**.

The computer system **700** and associated functionality and features will be discussed in some further detail. The computer system **700** may be configured to obtain road segment data associated with a road segment ahead of the vehicle **10**. The road segment data may comprise topography data and/or map data associated with a predicted route and/or a current position of the vehicle **10**.

The road segment data may be associated with an identifier of an upcoming road segment. The road segment data may be obtained from an electronic device. The electronic device may be the cloud server **50** or a local storage of the vehicle **10**, such as the previously presented storage device **720** of the computer system **700**. The road segment data may be any suitable information concerning physical features and characteristics of the Earth's surface. The road segment data may comprise details such as, but not limited to, elevation, slope, terrain, landforms, and/or other spatial attributes. The road segment data may be exemplified by, but not limited to, Digital Elevation Models (DEMs), contour lines, slope and aspect maps etc. The road segment data may be produced by e.g. government agencies, research institutions, and/or commercial providers.

In the example depicted in **FIG. 4**, the computer system **700** is at least partially provided as a part of the vehicle **10**. In particular, the computer system **700** is depicted as being fully comprised in the vehicle **10**.

The computer system **700** may thus at least partially be comprised a the vehicle control system **100**. The vehicle control system **100** may be operatively connected to the communications circuitry **40**, the propulsion battery **14**, the brake energy storage battery **16**, the electrical motor brake system **12**, the drivetrain **18** and/or the sensor circuitry **11**. The vehicle control system **100** may be configured to control and/or obtain data from said communications circuitry **40**, the propulsion battery **14**, the brake energy storage battery **16**, the electrical motor brake system **12**, the drivetrain **18** and/or the sensor circuitry **11**.

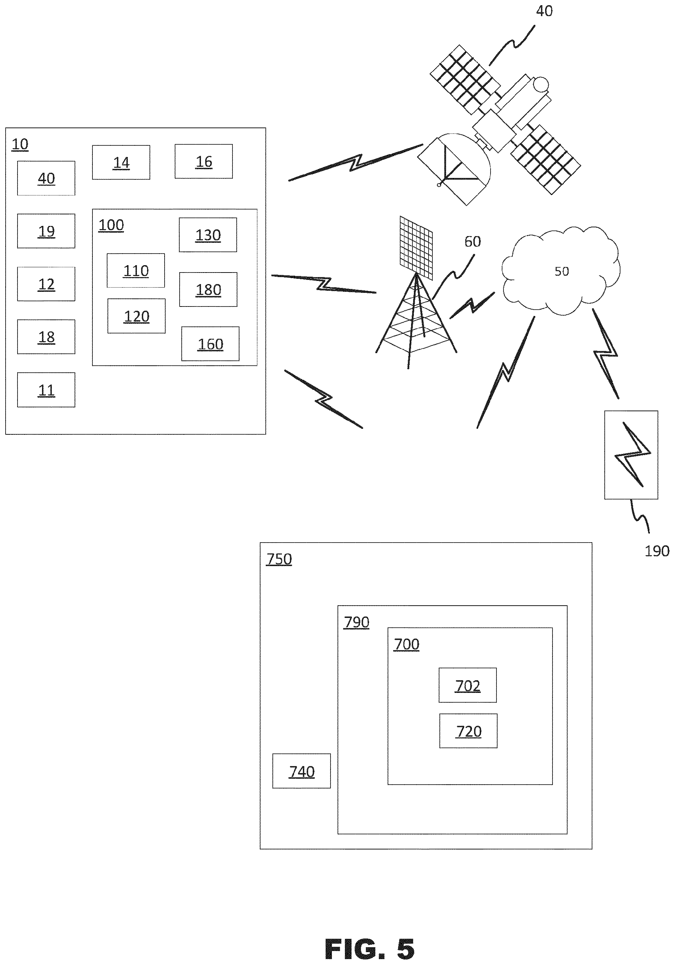

In the example depicted in **FIG. 5**, the computer system **700** is at least partially provided as a part of an external device. In particular, the computer system **700** is depicted as being fully comprised in an external device, herein referenced as a remote device **750**. The remote device **750** may be a computing device such as a mobile phone, tablet, computer, laptop etc.

As depicted in **FIG. 5**, the vehicle control system **100** comprises processing circuitry **110**. The vehicle control system **100** may comprise a storage device **120**, advantageously a non-volatile storage device such as a hard disk drives (HDDs), solid-state drives (SSDs) etc. In some examples, the storage device **120** is operatively connected to the computer system **100**.

The remote device **750** may be in operative communication with the vehicle **10** and/or external devices, such as the charging station **190** and, in case of the computer system **700** being fully or partially external to the external device **10**, the computer system **700**. The connection may be provided by e.g. the communications circuitry **740** of the remote device **750**. The remote device **750** may be in communication with the vehicle **10**, e.g. the communications circuitry **40** of the vehicle **10**, directly or via the cloud (backend) server **50**. The remote device **750** may communicate with the cloud server **50** directly or via the communications interface such as the cellular communications interface **60**, such as a radio base station. The cloud server **50** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. Communication with the external devices may be provided by any suitable communications protocol exemplified by, but not limited to Dedicated Short-Range Communications (DSRC), Cellular Vehicle-to-Everything (C-V2X), IEEE 802.1 lp, LTE-V (LTE-V2X), 5G NR (New Radio) V2X, etc. The remote device **750** may further be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The remote device **750** may be configured to utilize data obtain from the GNSS **40** to determine a geographical position of the vehicle **10** and/or the remote device **750**.

The remote device **750** may comprise some or all parts of the computer system **700** and/or the cloud server **50** may comprise some or all part of the computer system **700** and/or an external device may comprise some or all part of the computer system **700**. The computer system **700** may be operatively connected to the communications circuitry **740** of the remote device **750**, the sensor circuitry **11**, the energy source **14** and/or the electrical propulsion motor **12** of the vehicle **10**. To enable communication with the vehicle control system **100**, the communications circuitry **740** of the remote device **750** may be configured to be in operative communication with the communications circuitry **40** of the vehicle **10**.

As aforementioned, the computer system **700** may be configured to obtain road segment data associated with a road segment ahead of the vehicle **10**. The road segment data may be obtained from an electronic device. The electronic device may be the cloud server **50**, a local storage of the vehicle **10**, such as the storage device **120** of the vehicle control system 100 or a local storage of the remote device **750** such as the previously presented storage device **720** of the remote device **750**.

A battery management control system **790** may provided. The battery management control system **790** may be configured to be operatively connected to the vehicle **10**. The remote device **750** may partly or fully comprise the battery management control system **790**. The battery management control system **790** may comprise the computer system **700**.

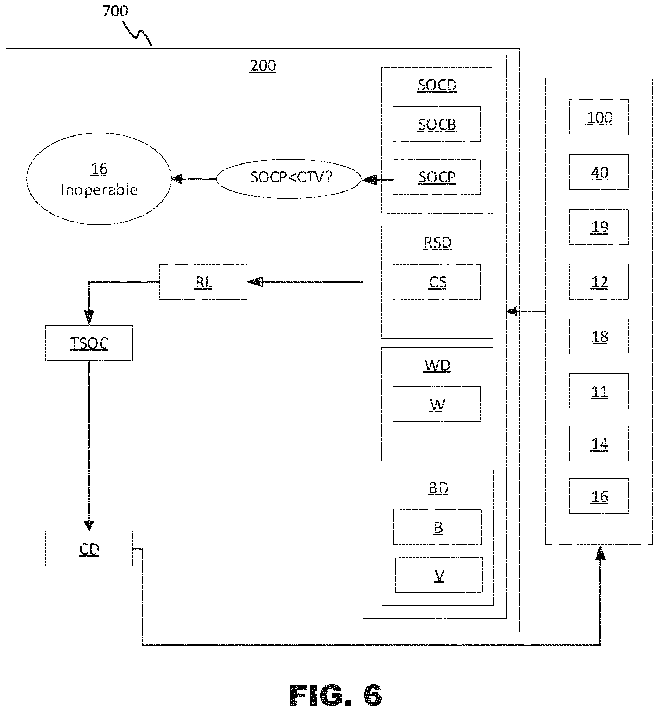

In **FIG. 6**, a block diagram of a brake energy battery manager **200** is shown. The brake energy battery manager **200** may form part of the computer system **700** previously introduced, and the functionalities of the brake energy battery manager **200** may be provided by the processing circuitry **702** of the computer system **700**. It should be mentioned that the brake energy manager **200** of **FIG. 6** is a specific example and the detailed examples provided in the following are optional implementation examples.

The brake energy battery manager **200** is operatively connected to the brake energy storage battery **16**. The brake energy battery manager **200** may be operatively connected to the vehicle control system **100**, the communications circuitry **40**, the electrical motor brake system **19**, the electrical propulsion motor **12**, the drivetrain **18** and/or the sensor circuitry **11**.

The processing circuitry **702** of the computer system **700**, e.g. via the brake energy battery manager **200**, may be configured to obtain state of charge data **SOCD** from the brake energy storage battery **16**. The processing circuitry **702**, e.g. via the brake energy battery manager **200**, may be configured to cause control of the state of charge **SOCB** of the brake energy storage battery **16** based on the road segment data **RSD** and the state of charge data **SOCD.**

Notably, the functionality described in the following with reference to brake energy battery manager **200** may be performed by means of the computer system **700** and as said computer system **700** comprises said brake energy battery manager **200**. The functionality may be called upon by the processing circuitry **702**.

Hence, the brake energy battery manager **200** may be configured to obtain the state of charge data **SOCD** and cause control of the state of charge **SOCB** of the brake energy storage battery **16**.

In one example, the state of charge data **SOCD** may be provided by the sensor circuitry **11**. The sensor circuitry **11** may be configured to monitor the state of charge of the brake energy storage battery **16**. The sensor circuitry **11** may be configured to retrieve the state of charge data **SOCD** from the brake energy storage battery **16**. The brake energy battery manager **200** may be configured to obtain state of charge data **SOCD** from the brake energy storage battery **16** via the sensor circuitry **11**.

In one example, the brake energy battery manager **200** may be configured to obtain state of charge data from the propulsion battery **14**. In one example, the sensor circuitry **11** may be configured to monitor the state of charge of the propulsion battery **14**. The sensor circuitry **11** may be configured to retrieve the state of charge data **SOCD** from the propulsion battery **14**. The brake energy battery manager **200** may be configured to obtain state of charge data from the propulsion battery **14** via the sensor circuitry **11**. In the depicted example, the propulsion battery **16** may have a state of charge **SOCP**.

In one example, the brake energy battery manager **200** may be configured to provide control data **CD** for causing the control of the state of charge of the brake energy storage battery **16**. Based on the control data **CD**, the vehicle control system **100** may be configured to cause control of the state of charge of the brake energy storage battery **16**. In one example, the control data **CD** may be retrieved by a battery control system of the vehicle control system **100**. The control system **100** may be configured to control the brake energy storage battery **16** and/or the propulsion battery **14**.

In one example, the brake energy battery manager **200** may be configured to obtain weight data **WD** associated with a weight of the vehicle **10**. The brake energy battery manager **200** may be configured to cause control of the state charge **SOCB** of the brake energy storage battery **16** based on the weight data **WD**. The weight data **WD** may be provided by the sensor circuitry **11**. The sensor circuitry **11** may be configured to monitor the weight of the vehicle **10**. The brake energy battery manager **200** may be configured to obtain the weight data **WD** from the sensor circuitry **11**.

In one example, the brake energy battery manager **200** is configured to determine a target state of charge **TSOC** of the brake energy storage battery **16** based on the road segment data **RSD**. In one example, the target state of charge **TSOC** may be associated with a target state of charge of the brake energy storage battery **16** at the end of the road segment ahead of the vehicle **10**.

The brake energy battery manager **200** may be configured to cause control of the state of charge **SOCB** of the brake energy storage battery **16** based on the target state of charge **TSOC**.

In one example, the brake energy battery manager **200** may be configured to determine a regenerative charging level **RL**. The regenerative charging level **RL** may be associated with the charging of the brake energy storage battery **16** estimated to be provided by the electrical motor brake system **19** for the road segment ahead of the vehicle **10**. The brake energy battery manager **200** may be configured to determine the target state of charge **TSOC** based on the regenerative charging level **RL**.

In one example, the brake energy battery manager **200** may be configured to process the road segment data **RSD** to identify a downhill slope. The brake energy battery manager **200** may be configured to control of the state of charge **SOCB** of the brake energy storage battery **16** based on the characteristics **CS** of the identified downhill slope. In one example, the processing circuitry **702**, i.e. the brake energy battery manager **200**, may be further configured to process the road segment data **RSD** to determine the presence of the downhill slope and responsive to determining the presence of the downhill slope, control the state of charge **SOCB** of the brake energy storage battery **16** based on the characteristics of the downhill slope.

In one example, the brake energy battery manager **200** may be configured to determine based on the state of charge data **SOCD** the occurrence of a charging operation wherein the brake energy storage battery **16** is recharged. The brake energy battery manager **200** may responsive to the occurrence of the charging operation, cause control of the charging operation based on the road segment data **RSD**.

In the use case of the brake energy storage battery **16** being provided as a separate battery from the propulsion battery **14**, the brake energy battery manager **200** may only enable use of the brake energy storage battery **16** in cases where the propulsion battery **14** is at full or high capacity. The brake energy battery manager **200** may thus be configured to cause the brake energy storage battery **16** to be inoperable in response to the state of charge **SOCP** of the propulsion battery **16** being below a capacity threshold value **CTV**.

In one example, the processing circuitry **702** may be configured to obtain braking operational data **BD** associated with the operation of the electrical motor brake system **19** for the road segment ahead of the vehicle **10** and cause control of the state of charge **SOCB** of the brake energy storage battery **16** based on the braking operational data **BD**. The brake energy battery manager **200** may be configured to obtain the braking operational data **BD** and cause control of the state of charge **SOCB** of the brake energy storage battery **16** based on the braking operational data **BD**.

The braking operational data **BD** may be obtained from the vehicle control system **100**. In one example, the braking operational data **BD** may be obtained from a cruise control function of the vehicle control system **100**. The cruise control function may comprise a predictive cruise control. The predictive cruise control may utilize the road segment data **RSD**. The braking operational data **BD** may comprise vehicle speed data **V** associated with the predicted speed of the vehicle **10** for the road segment and/or motor brake activation data **B** associated with activation of the electrical motor brake system **19** for the road segment. The motor brake activation data **B** may comprise data associated with the extent and/or timing of the activation of the electrical motor brake system **19** for the road segment.

In one example, the regenerative charging level **RL** may be determined based on the braking operational data **BD**, the weight data **WD**, the road segment data **RD** and/or the state of charge data **SOCD**.

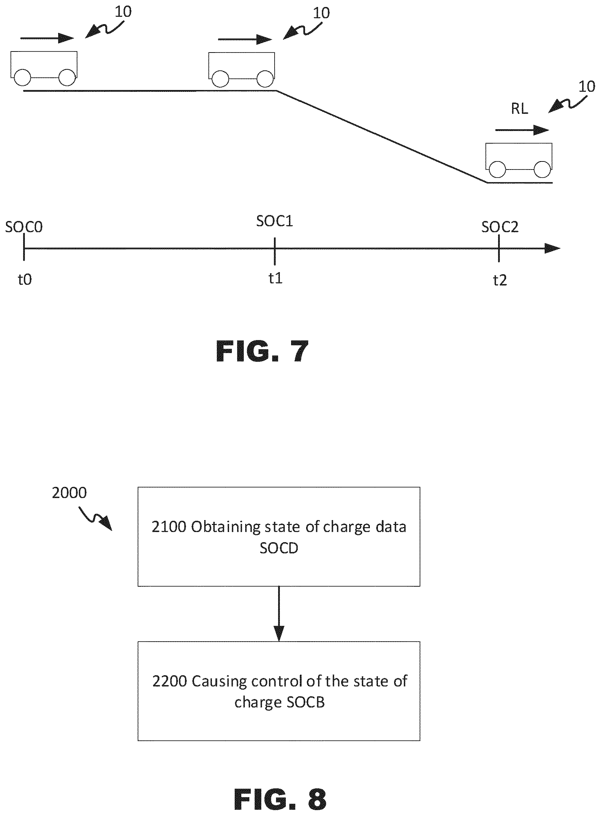

**FIG. 7** depicts an exemplary implementation of the brake energy battery manager **200** and the computer system **700**. The vehicle **10** at the time **t0** is positioned at a position prior to the start of a downhill slope of the route ahead of said vehicle **10**. At the time **t1**, the vehicle **10** is positioned at the start of the downhill slope. At the time **t2**, the vehicle **10** is positioned at the end of the downhill slope.

At the time **t0**, the brake energy battery manager **200** may determine from the road segment data **RSD** the occurrence of the downhill slope. The brake energy battery manager **200** may process the road segment data **RSD** to determine the characteristics **CS** of the downhill slope. Such characteristics may include the length and incline/decline of the downhill slope. Based on the characteristics **CS** and potentially the weight of the vehicle **10** and/or the braking operational data **BD**, the brake energy battery manager **200** may determine the regenerative charging level **RL**. The regenerative charging level **RL** is associated with the charging of the brake energy storage battery **16** estimated to be provided by the electrical motor brake system **19** for the downhill slope. The regenerative charging level **RL** thus provides an indication of how much regenerative braking energy will be generated during the braking of the electrical propulsion motor **12** of the vehicle **10** during the downhill slope.

At the time **t0**, the state of charge of the brake energy storage battery **14** may herein be referenced at **SOC0**. The brake energy battery manager **200** may determine the state of charge **SOC0** based on the state of charge data **SOCD**. The target state of charge **TSOC** may be associated with a target state of charge of brake energy storage battery **16** at the end of the downhill slope. The regenerative charging level **RL** may in this case be associated with a correlated state of charge **SOC2** of the brake energy storage battery **16** at the time **t2** after the downhill slope. Based on the determined state of charge **SOCO** before the downhill slope and the determined state of charge **SOC2** after the downhill slope, a target state of charge **TSOC** of the brake energy storage battery **16** may be determined by the brake energy battery manager **200**. The target state of charge **TSOC** may be determined such that enough available capacity is provided in the brake energy storage battery **16** to accommodate the amount of regenerative braking energy indicated by the determined regenerative charging level **RL**. The brake energy battery manager **200** may then control the state of charge **SOC** of the brake energy storage battery **16** in accordance with the target state of charge **TSOC.**

Depending on the nature of the operation of the vehicle **10** at the time **t0**, the control based on the target state of charge **TSOC** may vary.

In one example, the vehicle **10** may at the time **t0** be parked at a charging station **190** (as described with reference to **FIG. 4-5**). At the charging station, the brake energy storage battery **16** may be charged. The brake energy battery manager **200** may thus determine the occurrence of a charging operation. The brake energy battery manager **200** may cause control of the charging operation based on the determined target state of charge **TSOC.** For example, a maximum level of state of charge provided by the charging operation may be set, ensuring that the brake energy storage battery **16** has enough capacity to accommodate the regenerative energy determined to be generated during the braking of the electrical propulsion motor **12** in the upcoming downhill slope. Accordingly, the brake energy battery manager **200** may cause the amount of charge provided to the brake energy storage battery **16** in the charging operation to be limited in accordance with target state of charge **TSOC.**

In one example, the vehicle **10** may at the time **t0** be moving. If the downhill slope is detected while the vehicle **10** is moving, it may be determined that the state of charge **SOC0** at the time **t0** is too high in order to accommodate the regenerative energy indicated by the determined regenerative energy level RL. Hence, it may be of importance that the state of charge of the brake energy storage battery **16** is reduced before the time **t1** when the vehicle **10** reaches the downhill slope. Thus, in the event of the state of charge **SOC0** at the time **t0** exceeds an initial target state of charge at the time **t1** based on the determined target state of charge **TSOC**, the brake energy battery manager **200** may cause discharging of the brake energy storage battery **16** such that the target state of charge **TSOC** may be obtained at the time **t2**. Depending on the implementation of the brake energy storage battery **16** this may be performed by means of causing the brake energy storage battery **16** to power the electrical propulsion motor **12** and/or auxiliary components of the vehicle **10**.

The brake energy battery manager **200** may cause the discharging of the brake energy storage battery **16** based on the determined target state of charge **TSOC**. The brake energy battery manager **200** may cause a discharge such that the state of charge of the brake energy storage battery **16** is within an acceptable interval relative to the target state of charge **TSOC**. In the depicted example, the brake energy battery manager **200** may cause the discharge such that the state of charge **SOC1** at the time **t1** is within the acceptable interval relative to the target state of charge **TSOC**. Thus, it is ensured at the point where the vehicle **10** starts to travel through the downhill slope that there is enough capacity in the brake energy storage battery **16** for the braking of the electrical propulsion motor **12** during the downhill slope until the time **t2**, e.g. the end of the downhill slope.

**FIG. 8** depicts a method **2000** according to an example. In one example, the method **2000** may be performed by the computer system **700**. The method **2000** may be expanded to include any of the features, examples and effects presented herein. The method **2000** may comprise obtaining **2100**, by the processing circuitry **702**, the state of charge data **SOCD** and causing **2200**, by the processing circuitry **702**, control of the state of charge **SOCB**.

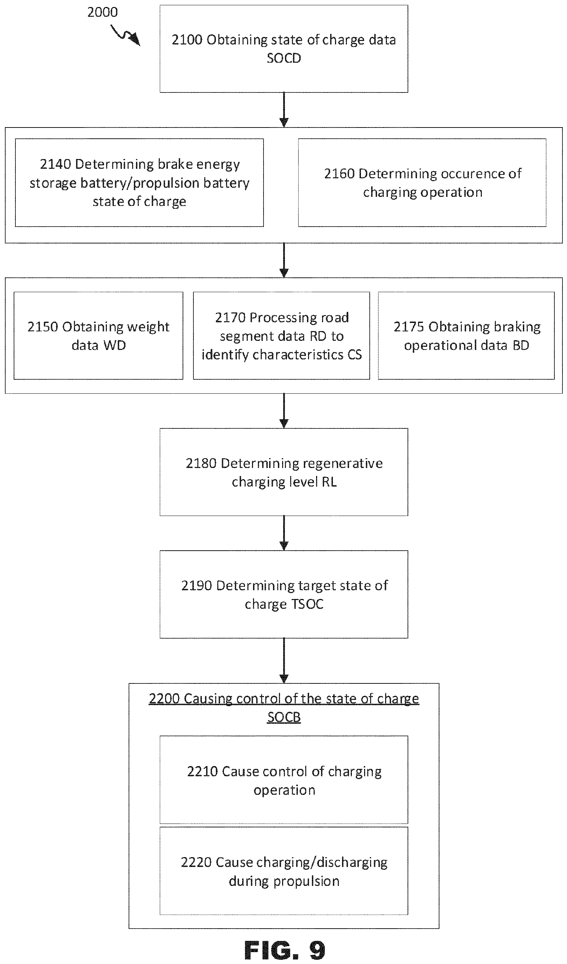

**FIG. 9** depicts a method according to an example. The method **2000** herein described may be performed by the processing circuitry **702** of the computer system **700**.

The state of charge data **SOCD** is obtained **2100**. Based on the state of charge data **SOCD**, parameters related to the brake energy storage battery **16** and/or the propulsion battery **14** may be determined. In one example, the state of charge of the brake energy storage battery **16** and/or the propulsion battery **14** is determined **2140**.

In one example, the state of charge data **SOCD** may be utilized to determining the occurrence of the charging operation. The occurrence of the charging operation may be determined **2160** based on the state of charge data **SOCD**.

The method may further comprise obtaining **2150** the weight data **WD**. Based on the weight data **WD** the weight of the vehicle **10** may be determined. Optionally, the weight data **WD** may comprise the actual weight of vehicle **10**.

In one example, the method may further comprise processing **2170** the road segment data **2170** to identify the characteristics **CS** of the road segment ahead of the vehicle **10**.

In one example, the method may comprise obtaining **2175** braking operational data **BD** associated with the operation of the electrical motor brake system **19** for the road segment ahead of the vehicle **10**.

Based on the state of charge **SOCB** of the brake energy storage battery **16**, the state of charge **SOCP** of the propulsion battery **14**, the weight data **WD**, the road segment data **RD**, the braking operational data **BD** and/or the characteristics **CS** of the road segment ahead of the vehicle **10**, the regenerative charging level **RL** may be determined **2180**.

Based on the regenerative charging level **RL**, the target state of charge **SOCB** of the brake energy battery storage battery **16** may be determined **2190**. The target state of charge **SOCB** may be utilized for the control of the brake energy storage battery **16**. The method may thus comprise causing **2200** causing control of the state of charge **SOCB** of the brake energy storage battery **16** based on the target state of charge **TSOC.**

The control of the brake energy storage **16** may in one example comprise causing **2210** control of a charging operation. The charging operation may be a charging operation wherein the brake energy storage **16** is charged.

The control of the brake energy storage battery **16** may in one example comprise causing **2220** charging and/or discharging the brake energy storage battery **16**. For example, the control of the brake energy storage battery **16** may comprise charging and/or discharging the brake energy storage battery **16** during propulsion of the vehicle **10**.

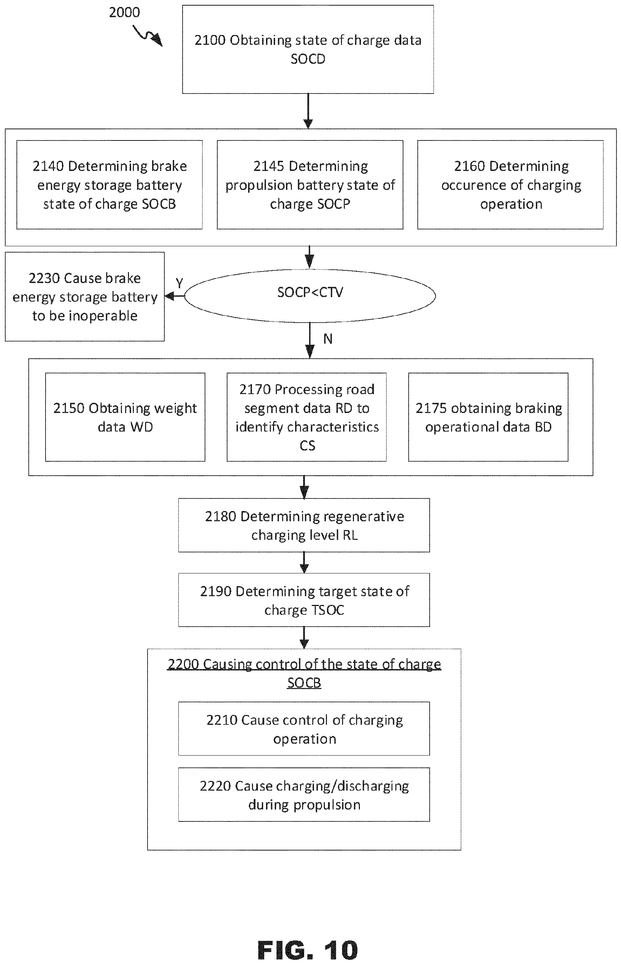

**FIG. 10** depicts the method according to another example. In the depicted example, the brake energy storage battery **16** is provided as a battery unit separate from the propulsion battery **14**.

According to the depicted example, the state of charge **SOCB** of the brake energy storage battery **16**, the state of charge **SOCP** of the propulsion battery **14** and/or the occurrence of a charging operation may be determined.

The method may comprise determining **2140**, the state of charge **SOCB** of the brake energy storage battery **16**. The state of charge **SOCB** may be determined based on the state of charge data **SOCD.**

The method may comprise determining **2145**, the state of charge **SOCP** of the propulsion battery **14**. The state of charge **SOCP** may be determined based on the state of charge data **SOCD.**

The method may comprise determining **2160**, the occurrence of the charging operation. The occurrence of the charging operation based on the state of charge data **SOCD**.

In the event of the propulsion battery **14** having available capacity for receiving the regenerative energy generated by an upcoming braking of the electrical propulsion motor **12**, the propulsion battery **14** may be utilized for the storing of the regenerative energy instead of the brake energy storage battery **16**.

The method may comprise determining whether the state of charge **SOCP** of the propulsion battery **14** is below a capacity threshold value **CTV**. Responsive to the state of charge **SOCP** being below the capacity threshold value **CTV**, the brake energy storage battery **16** may be caused **2230** to be inoperable. Responsive to the state of charge **SOCP** exceeding the capacity threshold value **CTV**, control of the state of charge **SOCB** of the brake energy storage battery **16** may be performed in accordance with steps described with reference to **FIG. 8** and/or **FIG. 9****.**

The method **2000** may be expanded and altered to comprise any feature, variant or example presented herein.

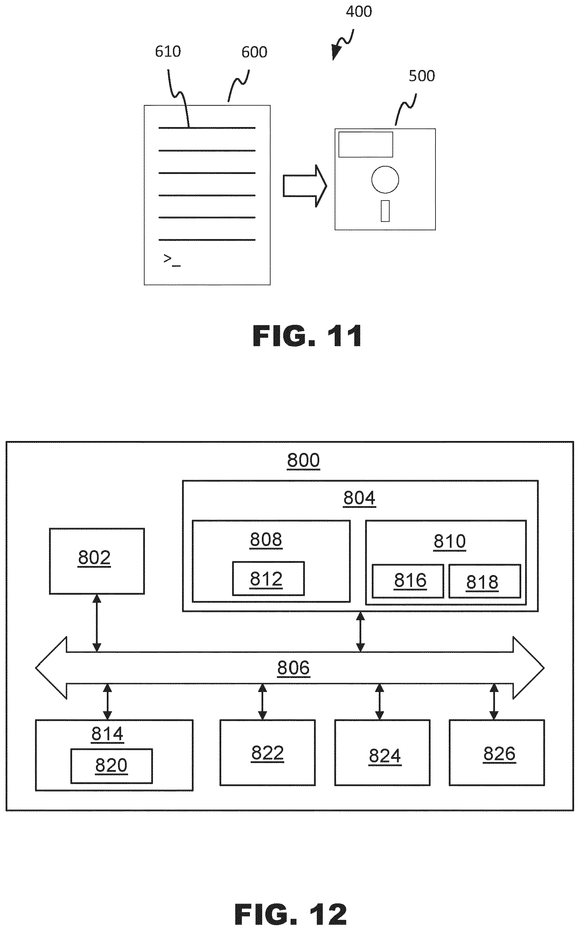

In **FIG. 11** a computer program product **400** is shown. The computer program product **400** comprises a computer program **600** and a non-transitory computer readable medium **500**. The computer program **600** may be stored on the computer readable medium **500**. The computer readable medium **500** is, in **FIG. 11**, exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **600** comprises instruction **610** e.g. program instruction, software code, that, when executed by processing circuitry cause the processing circuitry to perform the method **2000** introduced with reference to **FIG. 8****-****FIG. 10**.

**FIG. 11** is a schematic diagram of a computer system **800** for implementing examples disclosed herein. The computer system **800** may be the previously described computer system **700**. The computer system **800** is adapted to execute instructions from a computer-readable medium to perform these and/or any of the functions or processing described herein. The computer system **800** may be connected (e.g., networked) to other machines in a LAN, an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804**, and a system bus **806**. The computer system **800** may include at least one computing device having the processing circuitry **802**. The system bus **806** provides an interface for system components including, but not limited to, the memory **804** and the processing circuitry **802**. The processing circuitry **802** may include any number of hardware components for conducting data or signal processing or for executing computer code stored in memory **804**. The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., randomaccess memory (RAM)), or any other medium which can be used to carry or store desired program code in the form of machine-executable instructions or data structures and which can be accessed by a computer or other machine with processing circuitry **802**. A basic input/output system (BIOS) **812** may be stored in the non-volatile memory **808** and can include the basic routines that help to transfer information between elements within the computer system **800**.

The computer system **800** may further include or be coupled to a non-transitory computer-readable storage medium such as the storage device **814**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810**, which may include an operating system **816** and/or one or more program modules **818**. All or a portion of the examples disclosed herein may be implemented as a computer program **820** stored on a transitory or non-transitory computer-usable or computer-readable storage medium (e.g., single medium or multiple media), such as the storage device **814**, which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802**. In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802**. The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

A system or method according to any of the following examples may be provided.

Example 1: A computer system (**700**) comprising processing circuitry (**702**) configured to: obtain state of charge data (**SOCD**) from a brake energy storage battery (**16**) of an electrically propelled vehicle (**10**), said vehicle (**10**) comprising an electrical motor brake system (**19**) for braking at least one electrical propulsion motor (**12**) of said vehicle (**10**) and charging the brake energy storage battery (**16**) with regenerative energy obtained from the electrical propulsion motor (**12**); cause control of a state of charge (**SOCB**) of the brake energy storage battery (**16**) based on road segment data (**RSD**) associated with a road segment ahead of the vehicle (**10**) and the state of charge data (**SOCD**).

Example 2: The computer system (**700**) of example 1, wherein the road segment data (**RSD**) comprises topography data and/or map data associated with a predicted route and/or a current position of the vehicle (**10**).

Example 3: The computer system (**700**) of example 1 or 2, wherein the processing circuitry (**702**) is further configured to: obtain weight data (**WD**) associated with a weight of the vehicle (**10**); and cause control of the state of charge (**SOCB**) of the brake energy storage battery (**16**) based on the weight data (**WD**).

Example 4: The computer system (**700**) of any of example 1 to 3, the processing circuitry (**702**) being further configured to: determine a target state of charge (**TSOC**) of the brake energy storage battery (**16**) based on the road segment data (**RSD**); and cause control of the state of charge (**SOCB**) of the brake energy storage battery (**16**) based on the target state of charge (**TSOC**).

Example 5: The computer system (**700**) of claim 4, wherein the processing circuitry (**702**) is further configured to: determine a regenerative charging level (**RL**) associated with the charging of the brake energy storage battery (**16**) estimated to be provided by the electrical motor brake system (**19**) for the road segment ahead of the vehicle (**10**); and determine the target state of charge (**TSOC**) based on the regenerative charging level (**RL**).

Example 6: The computer system (**700**) of any of example 1 to 5, wherein the processing circuitry (**702**) is further configured to process the road segment data (**RSD**) to identify a downhill slope and cause control of the state of charge (**SOCB**) of the brake energy storage battery (**16**) based on characteristics (**CS**) of the identified downhill slope.

Example 7: The computer system (**700**) of any of example 1 to 6, wherein the vehicle (**10**) comprises a propulsion battery (**14**) configured to power the electric propulsion motor (**12**).

Example 8: The computer system (**700**) of example 7, wherein the brake energy storage battery (**16**) is formed by a battery unit provided separately from the propulsion battery (**14**).

Example 9: The computer system (**700**) of example 8, wherein the processing circuitry (**702**) is configured to cause the brake energy storage battery (**16**) to be inoperable in response to the state of charge (**SOCP**) of the propulsion battery (**16**) being below a capacity threshold value (**CTV**).

Example 10: The computer system (**700**) of example 7, wherein the propulsion battery (**14**) forms the brake energy storage battery (**16**).

Example 11: The computer system (**700**) of any of example 1 to 10, wherein the processing circuitry (**702**) is configured to: determine based on the state of charge data (**SOCD**) the occurrence of a charging operation wherein the brake energy storage battery (**16**) is recharged; and responsive to the occurrence of the charging operation, cause control of the charging operation based on the road segment data (**RSD**).

Example 12: The computer system (**700**) of any of example 1 to 11, wherein the processing circuitry (7**0**2) is configured to: obtain braking operational data (**BD**) associated with the operation of the electrical motor brake system (**19**) for the road segment ahead of the vehicle (**10**); and cause control of the state of charge (**SOCB**) of the brake energy storage battery (**16**) based on said braking operational data (**BD**).

Example 13: An electrically propelled vehicle (**10**) comprising at least one electrical propulsion motor (**12**), an electrical motor brake system (**19**) for braking the at least one electrical propulsion motor (**12**) and a computer system (**700**) of any of example 1 to 12.

Example 14: Battery management control system (**790**) comprising the computer system (**700**) according to any one of example 1 to 12, wherein the battery management control system (**790**) is configured to be operatively connected to an electrically propelled vehicle (**10**).

Example 15: A computer-implemented method (**2000**) comprising: obtaining (**2100**), by processing circuitry (**702**) of a computer system (**700**), state of charge data (**SOCD**) from a brake energy storage battery (**16**) of an electrically propelled vehicle (**10**), said vehicle (**10**) comprising an electrical motor brake system (**19**) for braking at least one electrical propulsion motor (**12**) of said vehicle (**10**) and charging the brake energy storage battery (**16**) with regenerative energy obtained from the electrical motor brake system (**19**); and causing (**2200**), by the processing circuitry (**702**) control of the state of charge (**SOCB**) of the brake energy storage battery (**16**) based on road segment data (**RSD**) associated with a road segment ahead of the vehicle (**10**) and the state of charge data (**SOCD**).

Example 16: The method (**2000**) of claim 15, further comprising: obtaining (**2150**), by the processing circuitry (**702**), weight data (**WD**) associated with a weight of the vehicle (**10**); and causing (**2200**), by the processing circuitry (**702**), control of the state of charge (**SOCB**) of the brake energy storage battery (**16**) based on the weight data (**WD**).

Example 17: The method (**2000**) of example 15 or 16, further comprising: determining (**2190**), by the processing circuitry (**702**), a target state of charge (**TSOC**) of the brake energy storage battery (**16**) based on the road segment data (**RSD**); and causing (**2200**), by the processing circuitry (**702**), control of the state of charge (**SOCB**) of the brake energy storage battery (**16**) based on the target state of charge (**TSOC**).

Example 18: The method (**2000**) of any of example 15 to 17, further comprising; determining (**2180**), by the processing circuitry (**702**), a regenerative charging level (**RL**) associated with the charging of the brake energy storage battery (**16**) estimated to be provided by the electrical motor brake system (**19**) for the road segment ahead of vehicle (**10**); and determining (**2190**), by the processing circuitry (**702**), the target state of charge (**TSOC**) based on the regenerative charging level (**RL**).

Example 19: The method (**2000**) of any of example 15 to 18, further comprising: processing (**2170**), by the processing circuitry (**702**), the road segment data (**RD**) to identify a downhill slope; and causing (**2200**) control of the state of charge (**SOCB**) of the brake energy storage battery (**16**) based on the characteristics (**CS**) of the identified downhill slope.

Example 20: The method (**2000**) of any of example 15 to 19, wherein the brake energy storage battery (**16**) is a dedicated battery provided separately from a propulsion battery (**14**) configured to power the electric propulsion motor (**12**) of the vehicle (**10**), the method further comprising: causing (**2230**), by the processing circuitry (**702**), the brake energy storage battery (**16**) to be inoperable in response to the state of charge (**SOCP**) of the propulsion battery (**14**) being below a capacity threshold value (**CTV**).

Example 21: The method (**2000**) of any of example 15 to 20, further comprising: determining (**2160**), by the processing circuitry (**702**), the occurrence of a charging operation wherein the brake energy storage battery (**16**) is recharged; and responsive to the occurrence of the charging operation, causing (**2210**), by the processing circuitry (**702**), control of the charging operation based on the road segment data (**RD**).

Example 22. The method (**2000**) of any of example 15 to 21, further comprising: obtaining (**2175**), by the processing circuitry (**702**), braking operational data (**BD**) associated with the operation of the electrical motor brake system (**19**) for the road segment ahead of the vehicle (**10**); and causing (**2200**), by the processing circuitry (**702**) of the state of charge (**SOCB**) of the brake energy storage battery (**16**) based on said braking operational data (**BD**).

Example 23: A computer program product **(400)** comprising program code **(600)** for performing, when executed by a processing circuitry **(702)**, the method **(2000)** of any of examples 15 to 22.

Example 24: A non-transitory computer-readable storage medium **(500)** comprising instructions, which when executed by a processing circuitry **(702)**, cause the processing circuitry **(702)** to perform the method **(2000)** of any of examples 15 to 22.

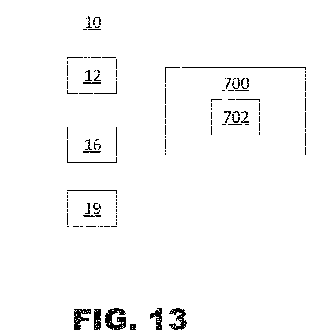

**FIG. 13** is another view of **FIG. 1** according to an example. The computer system **700** comprises the processing circuitry **702**. The processing circuitry **702** is configured to obtain the state of charge data **SOCD** from the brake energy storage battery **16** of the electrically propelled vehicle **10**. The vehicle **10** comprises the electrical motor brake system **19** for braking the at least one electrical propulsion motor **12** of the vehicle **10** and charging the brake energy storage battery **16** with regenerative energy obtained from the electrical propulsion motor **12**. The processing circuitry **702** is configured to cause control of the state of charge **SOCB** of the brake energy storage battery **16** based on the road segment data **RSD** associated with the road segment ahead of the vehicle **10** and the state of charge data **SOCD**.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system **(700)** comprising processing circuitry **(702)** configured to:
- obtain state of charge data **(SOCD)** from a brake energy storage battery **(16)** of an electrically propelled vehicle **(10)**, said vehicle **(10)** comprising an electrical motor brake system **(19)** for braking at least one electrical propulsion motor **(12)** of said vehicle **(10)** and charging the brake energy storage battery **(16)** with regenerative energy obtained from the electrical propulsion motor **(12)**, and
- cause control of a state of charge **(SOCB)** of the brake energy storage battery **(16)** based on road segment data **(RSD)** associated with a road segment ahead of the vehicle **(10)** and the state of charge data **(SOCD)**.

2. The computer system **(700)** of claim 1, wherein the road segment data **(RSD)** comprises topography data and/or map data associated with a predicted route and/or a current position of the vehicle **(10)**.

3. The computer system **(700)** of claim 1 or 2, wherein the processing circuitry **(702)** is further configured to:
- obtain weight data **(WD)** associated with a weight of the vehicle **(10)**, and
- cause control of the state of charge **(SOCB)** of the brake energy storage battery **(16)** based on the weight data **(WD)**.

4. The computer system **(700)** of any of claim 1 to 3, the processing circuitry **(702)** being further configured to:
- determine a target state of charge **(TSOC)** of the brake energy storage battery **(16)** based on the road segment data **(RSD)**, and
- cause control of the state of charge **(SOCB)** of the brake energy storage battery **(16)** based on the target state of charge **(TSOC)**.

5. The computer system **(700)** of any of claim 1 to 4, wherein the vehicle **(10)** comprises a propulsion battery **(14)** configured to power the electric propulsion motor **(12).**

6. The computer system **(700)** of claim 5, wherein the brake energy storage battery **(16)** is formed by a battery unit provided separately from the propulsion battery **(14)**, and wherein the processing circuitry **(702)** is further configured to cause the brake energy storage battery **(16)** to be inoperable in response to the state of charge (**SOCP**) of the propulsion battery **(16)** being below a capacity threshold value **(CTV).**

7. The computer system **(700)** of claim 5, wherein the propulsion battery **(14)** forms the brake energy storage battery **(16)**.

8. The computer system **(700)** of any of claim 1 to 7, wherein the processing circuitry **(702)** is configured to:
- determine based on the state of charge data **(SOCD)** the occurrence of a charging operation wherein the brake energy storage battery **(16)** is recharged, and
- responsive to the occurrence of the charging operation, cause control of the charging operation based on the road segment data **(RSD)**.

9. The computer system **(700)** of any of claim 1 to 8, wherein the processing circuitry **(702)** is configured to:
- obtain braking operational data **(BD)** associated with the operation of the electrical motor brake system **(19)** for the road segment ahead of the vehicle **(10)**, and
- cause control of the state of charge **(SOCB)** of the brake energy storage battery **(16)** based on said braking operational data **(BD)**.

10. The computer system **(700)** of any of claim 1 to 9, wherein the road segment data **(RSD)** comprises topography data and/or map data associated with a predicted route and/or a current position of the vehicle **(10)**, and wherein the processing circuitry **(702)** is further configured to:
- obtain weight data **(WD)** associated with a weight of the vehicle **(10)**,
- obtain braking operational data **(BD)** associated with the operation of the electrical motor brake system **(19)** for the road segment ahead of the vehicle **(10)**,
- determine a target state of charge **(TSOC)** of the brake energy storage battery **(16)** based on the road segment data **(RSD)**, and
- cause control of the state of charge **(SOCB)** of the brake energy storage battery **(16)** based on the weight data **(WD)**, the target state of charge **(TSOC)** and the braking operational data **(BD)**,
and wherein the processing circuitry **(702)** is further configured to process the road segment data **(RSD)** to identify a downhill slope and cause control of the state of charge **(SOCB)** of the brake energy storage battery **(16)** based on characteristics **(CS)** of the identified downhill slope.

11. An electrically propelled vehicle **(10)** comprising at least one electrical propulsion motor **(12)**, an electrical motor brake system **(19)** for braking the at least one electrical propulsion motor **(12)** and a computer system **(700)** of any of claim 1 to 10.

12. Battery management control system **(790)** comprising the computer system **(700)** according to any one of claim 1 to 10, wherein the battery management control system **(790)** is configured to be operatively connected to an electrically propelled vehicle **(10).**

13. A computer-implemented method **(2000)** comprising:
- obtaining **(2100)**, by processing circuitry **(702)** of a computer system **(700)**, state of charge data **(SOCD)** from a brake energy storage battery **(16)** of an electrically propelled vehicle (10), said vehicle **(10)** comprising an electrical motor brake system **(19)** for braking at least one electrical propulsion motor **(12)** of said vehicle **(10)** and charging the brake energy storage battery **(16)** with regenerative energy obtained from the electrical motor brake system (**19**), and
- causing **(2200)**, by the processing circuitry **(702)**, control of the state of charge **(SOCB)** of the brake energy storage battery **(16)** based on road segment data **(RSD)** associated with a road segment ahead of the vehicle **(10)** and the state of charge data **(SOCD)**.

14. A computer program product **(400)** comprising program code **(600)** for performing, when executed by a processing circuitry **(702)**, the method **(2000)** of claim 13.

15. A non-transitory computer-readable storage medium **(500)** comprising instructions, which when executed by a processing circuitry **(702)**, cause the processing circuitry **(702)** to perform the method **(2000)** of claim 13.

## Amended claims

### Amended claims in accordance with Rule 137(2) EPC.

1. A computer system **(700)** comprising processing circuitry **(702)** configured to:
- obtain state of charge data **(SOCD)** from a brake energy storage battery **(16)** of an electrically propelled vehicle **(10),** said vehicle **(10)** comprising an electrical motor brake system **(19)** for braking at least one electrical propulsion motor **(12)** of said vehicle **(10)** and charging the brake energy storage battery **(16)** with regenerative energy obtained from the electrical propulsion motor **(12),** and
- cause control of a state of charge **(SOCB)** of the brake energy storage battery **(16)** based on road segment data **(RSD)** associated with a road segment ahead of the vehicle **(10)** and the state of charge data **(SOCD),**
- determine based on the state of charge data **(SOCD)** the occurrence of a charging operation at a charging station **(190)** wherein the brake energy storage battery **(16)** is recharged, and
- responsive to the occurrence of the charging operation, cause control of the charging operation based on the road segment data **(RSD).**

2. The computer system **(700)** of claim 1, wherein the road segment data **(RSD)** comprises topography data and/or map data associated with a predicted route and/or a current position of the vehicle **(10).**

3. The computer system **(700)** of claim 1 or 2, wherein the processing circuitry **(702)** is further configured to:
- obtain weight data **(WD)** associated with a weight of the vehicle **(10),** and
- cause control of the state of charge **(SOCB)** of the brake energy storage battery **(16)** based on the weight data **(WD).**

4. The computer system **(700)** of any of claim 1 to 3, the processing circuitry **(702)** being further configured to:
- determine a target state of charge **(TSOC)** of the brake energy storage battery **(16)** based on the road segment data **(RSD),** and
- cause control of the state of charge **(SOCB)** of the brake energy storage battery **(16)** based on the target state of charge **(TSOC).**

5. The computer system **(700)** of any of claim 1 to 4, wherein the vehicle **(10)** comprises a propulsion battery **(14)** configured to power the electric propulsion motor **(12).**

6. The computer system **(700)** of claim 5, wherein the brake energy storage battery **(16)** is formed by a battery unit provided separately from the propulsion battery **(14),** and wherein the processing circuitry **(702)** is further configured to cause the brake energy storage battery **(16)** to be inoperable in response to the state of charge **(SOCP)** of the propulsion battery **(16)** being below a capacity threshold value **(CTV),** such that the propulsion battery **(14)** may be prioritized in cases where there is available capacity in the propulsion battery **(14)** during a motor braking operation such that the propulsion battery **(14)** can be utilized to brake the vehicle **(10)** as desired.

7. The computer system **(700)** of claim 5, wherein the propulsion battery **(14)** forms the brake energy storage battery **(16).**

8. The computer system **(700)** of any of claim 1 to 7, wherein the processing circuitry **(702)** is configured to:
- obtain braking operational data **(BD)** associated with the operation of the electrical motor brake system **(19)** for the road segment ahead of the vehicle **(10),** and
- cause control of the state of charge **(SOCB)** of the brake energy storage battery **(16)** based on said braking operational data **(BD).**

9. The computer system **(700)** of any of claim 1 to 8, wherein the road segment data **(RSD)** comprises topography data and/or map data associated with a predicted route and/or a current position of the vehicle **(10),** and wherein the processing circuitry **(702)** is further configured to:
- obtain weight data **(WD)** associated with a weight of the vehicle **(10),**
- obtain braking operational data **(BD)** associated with the operation of the electrical motor brake system **(19)** for the road segment ahead of the vehicle **(10),**
- determine a target state of charge **(TSOC)** of the brake energy storage battery **(16)** based on the road segment data **(RSD),** and
- cause control of the state of charge **(SOCB)** of the brake energy storage battery **(16)** based on the weight data **(WD),** the target state of charge **(TSOC)** and the braking operational data **(BD),**
and wherein the processing circuitry **(702)** is further configured to process the road segment data **(RSD)** to identify a downhill slope and cause control of the state of charge **(SOCB)** of the brake energy storage battery **(16)** based on characteristics **(CS)** of the identified downhill slope.

10. An electrically propelled vehicle **(10)** comprising at least one electrical propulsion motor **(12),** an electrical motor brake system **(19)** for braking the at least one electrical propulsion motor **(12)** and a computer system **(700)** of any of claim 1 to 9.

11. Battery management control system **(790)** comprising the computer system **(700)** according to any one of claim 1 to 9, wherein the battery management control system **(790)** is configured to be operatively connected to an electrically propelled vehicle **(10).**

12. A computer-implemented method **(2000)** comprising:
- obtaining **(2100),** by processing circuitry **(702)** of a computer system **(700),** state of charge data **(SOCD)** from a brake energy storage battery **(16)** of an electrically propelled vehicle **(10),** said vehicle **(10)** comprising an electrical motor brake system **(19)** for braking at least one electrical propulsion motor **(12)** of said vehicle **(10)** and charging the brake energy storage battery **(16)** with regenerative energy obtained from the electrical motor brake system **(19),**
- causing **(2200),** by the processing circuitry **(702),** control of the state of charge **(SOCB)** of the brake energy storage battery **(16)** based on road segment data **(RSD)** associated with a road segment ahead of the vehicle **(10)** and the state of charge data **(SOCD),**
- determining **(2160),** by the processing circuitry **(702)** based on the state of charge data **(SOCD)** the occurrence of a charging operation at a charging station **(190)** wherein the brake energy storage battery **(16)** is recharged, and
- responsive to the occurrence of the charging operation, causing, by the processing circuitry **(702),** control of the charging operation based on the road segment data **(RSD).**

13. A computer program product **(400)** comprising program code **(600)** for performing, when executed by a processing circuitry **(702),** the method (2000) of claim 12.

14. A non-transitory computer-readable storage medium **(500)** comprising instructions, which when executed by a processing circuitry **(702),** cause the processing circuitry **(702)** to perform the method **(2000)** of claim 12.
